**Europäisches Patentamt**

**European Patent Office**

**Office européen des brevets**

(19)

(11) Veröffentlichungsnummer : **0 072 467**
**B1**

(12) **EUROPÄISCHE PATENTSCHRIFT**

(45) Veröffentlichungstag der Patentschrift :
17.10.84

(21) Anmeldenummer : 82106832.7

(22) Anmeldetag : 28.07.82

(51) Int. Cl.³ : **A 61 J 3/00, B 01 F 9/02**

(54) **Dragiertrommel.**

(30) Priorität : 30.07.81 DE 3130166

(43) Veröffentlichungstag der Anmeldung :
23.02.83 Patentblatt 83/08

(45) Bekanntmachung des Hinweises auf die Patenterteilung : 17.10.84 Patentblatt 84/42

(84) Benannte Vertragsstaaten :
AT BE CH DE FR GB IT LI NL SE

(56) Entgegenhaltungen :
FR-A- 2 222 957

(73) Patentinhaber : **Hüttlin, Herbert**
**Lörracher Strasse 14**
**D-7853 Steinen (DE)**

(72) Erfinder : **Hüttlin, Herbert**
**Lörracher Strasse 14**
**D-7853 Steinen (DE)**

(74) Vertreter : **Wuesthoff, Franz, Dr.-Ing. et al**
**Patentanwälte Wuesthoff -v. Pech-**
**mann-Behrens-Goetz Schweigerstrasse 2**
**D-8000 München 90 (DE)**

EP 0 072 467 B1

## Beschreibung

Die Erfindung betrifft eine Dragiertrommel, deren Drehachse zumindest annähernd waagerecht ist, mit einem zumindest annähernd zylindrischen Rumpf und zwei sich an je eine Seite des Rumpfes anschließenden, zumindest annähernd kegelstumpfförmigen Stirnwandabschnitten.

In solchen Dragiertrommeln wird Dragiergut wie Granulat, Pellets, Tabletten oder auch Saatgut mit einem oder mehren Überzügen versehen, indem eine flüssige Überzugsmasse auf das Dragiergut aufgesprüht oder in das Dragiergut eingesprüht wird, während dieses von der sich drehenden Dragiertrommel in Bewegung gehalten wird. Dabei wird angestrebt, daß sich auf allen Partikeln des Dragierguts Überzüge von gleichmäßiger Beschaffenheit, vorallem von gleichmäßiger Dicke und Dichte, bilden. Diese Eigenschaften sind beispielsweise bei solchen oral anwendbaren Arzneimitteln von Bedeutung, die gegen Magensaft resistent sein müssen, damit sie ihre Wirkstoffe erst im Darm freigeben.

Die Wahrscheinlichkeit, daß sich auf allen Partikeln des Dragiergutes gleichmäßige Überzüge bilden, ist dann am größten, wenn die einzelnen Partikel bei der Drehung der Dragiertrommel in regelmäßiger Folge übereinander hinwegrollen. Es muß also dafür gesorgt werden, daß die einzelnen Partikel des Dragiergutes von der sich drehenden Trommel im wesentlichen gleichmäßig über eine bestimmte Strecke nach oben mitgenommen und dann freigegeben werden, so daß sie wieder nach unter rieseln können.

Es sind Dragiertrommeln der eingangs beschriebenen Gattung bekannt, beispielsweise aus der US-A-3 874 092, bei denen sich an einen zylindrischen Rumpf beiderseits je ein sich kegelstumpfförmig axial nach außen verjüngender Stirnwandabschnitt anschließt. In solchen Dragiertrommeln wird das Dragiergut im allgemeinen nur dann genügend kräftig und zugleich schonend in Bewegung versetzt, wenn an der Innenseite des Rumpfes Schikanen ausgebildet sind, die das Dragiergut auch bei mäßigen Drehgeschwindigkeiten der Dragiertrommel daran hindern, an der Innenseite des Rumpfes abwärts zu rutschen. Solche Schikanen können jedoch das Reinigen der Dragiertrommel wesentlich erschweren, vorallem wenn es sich um Schikanen wechselnder Form oder Anordnung handelt, mit denen die Durchmischung des Dragiergutes gefördert werden soll.

Entsprechendes gilt auch für kugel- oder zwiebelförmige Dragiertrommeln, wie sie ebenfalls aus des US-A-3 874 092 bekannt sind.

Der Erfindung liegt deshalb die Aufgabe zugrunde, eine Dragiertrommel derart auszugestalten, daß sie mit nur schwach ausgebildeten, leicht zu reinigenden Schikanen, vorzugsweise aber ohne jegliche Schikane dem gesamten in ihr enthaltenen Dragiergut eine regelmäßige rollende oder rieselnde Bewegung erteilen vermag.

Die Aufgabe ist bei einer Dragiertrommel der eingangs beschriebenen Gattung erfindungsgemäß dadurch gelöst, daß die beiden kegelstumpfförmigen Stirnwandabschnitte sich in den vom Rumpf umschlossenen Raum hineinerstrecken.

Damit wird erreicht, daß das Dragiergut sich zwischen den kegelstumpfförmigen Stirnwandabschnitten verspreizt, wodurch Reibungskräfte entstehen, die zusätzlich zu den durch die Schwerkraft hervorgerufenen, bei bekannten Dragiertrommeln allein wirksamen Reibungskräften bestrebt sind, das Dragiergut bei der Drehung der Trommel nach oben mitzunehmen. Das Dragiergut gelangt infolgedessen bei gegebener Drehgeschwindigkeit der Dragiertrommel weiter und vorallem gleichmäßiger nach oben, um dann schließlich herabzurieseln, und zwar teilweise wie bei bekannten Dragiertrommeln über das von unten heraufkommende Dragiergut hinweg und zum anderen Teil über die erfindungsgemäß nach innen ragenden kegelstumpfförmigen Stirnwandabschnitte hinweg. Dadurch, daß ständig ein Teil des Dragiergutes über die nach innen ragenden Stirnwandabschnitte hinwegrieselt, wird zusätzlich ein Mischeffekt erzielt, der ebenfalls dazu beiträgt, daß alle Partikel des Dragiergutes besonders gleichmäßige Überzüge erhalten. Da auf jegliche Schikane verzichtet werden kann, läßt sich auch die Gefahr, daß die Überzüge beschädigt werden, besonders gering halten.

Die erfindungsgemäße Dragiertrommel hat den weiteren Vorteil, daß sie im Vergleich mit bekannten Dragiertrommeln der eingangs beschriebenen Gattung von gleichem Rumpfdurchmesser und gleicher axialer Gesamtbreite eine größere Menge Dragiergutes aufnehmen und in der beschriebenen Weise gleichmäßig verarbeiten kann.

Bei bevorzugten Ausführungsformen der erfindungsgemäßen Dragiertrommel enden die beiden kegelstumpfförmigen Stirnwandabschnitte in Ringzonen, deren axialer Abstand voneinander 30 bis 70 %, vorzugsweise 45 bis 55 %, der Breite des Rumpfes beträgt. Der vom Rumpf umschlossene Innenraum der Dragiertrommel erhält also durch die erfindungsgemäß nach innen gezogenen kegelstumpfförmigen Stirnwandabschnitte eine erhebliche Einschnürung.

Der Durchmesser der Ringzonen beträgt zweckmäßigerweise 30 bis 70 %, vorzugsweise 45 bis 55 %, des Durchmessers des Rumpfes.

Die Kegelwinkel der Stirnwandabschnitte (gemessen zwischen zwei in einer gemeinsamen axialen Ebene einander diametral gegenüberliegenden Mantellinien) betragen zweckmäßigerweise 60 bis 120°, vorzugsweise 80 bis 100°.

An die Ringzonen kann sich je ein Endabschnitt anschließen, der sich axial nach außen kegelstumpfförmig verjüngt. Solche Endabschnitte erleichtern in bekannter Weise das Einfüllen des Dragiergutes und verhindern, daß Partikel einer ungleichmäßig eingebrachten Füllung beim Anlaufen der Dragiertrommel nach außen gelangen. Im Hinblick auf das normale Betriebsverhalten der erfindungsgemäßen Dragiertrommel sind solche Endabschnitte allerdings nicht erforderlich, da es selbst bei starker Dragiergutfüllung kaum vorkommt, daß ein Partikel des Dragiergutes von einer der Ringzonen derart abprallt, daß es nach außen springen könnte.

Ausführungsbeispiele der Erfindung werden im folgenden anhand schmematischer Zeichnungen beschrieben. Es zeigt :

Figur 1   eine Stirnansicht einer Dragieranlage mit einer erfindungsgemäßen Dragiertrommel,

Figur 2   die zugehörige Draufsicht,

Figur 3   den Schnitt III-III in Fig. 1 und

Figur 4   ein abgewandeltes Ausführungsbeispiel in einem der Fig. 3 entsprechenden Teilschnitt.

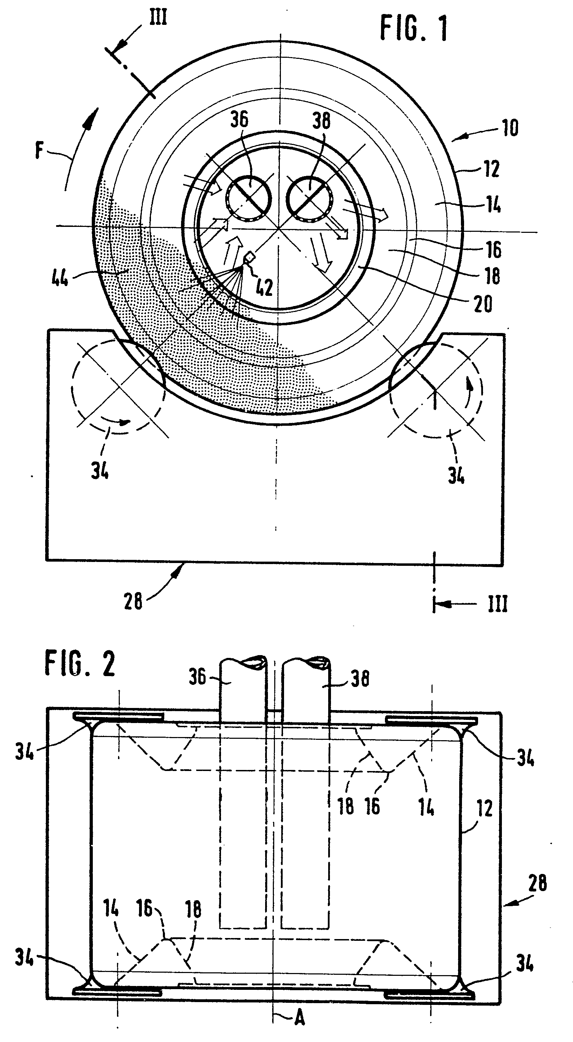

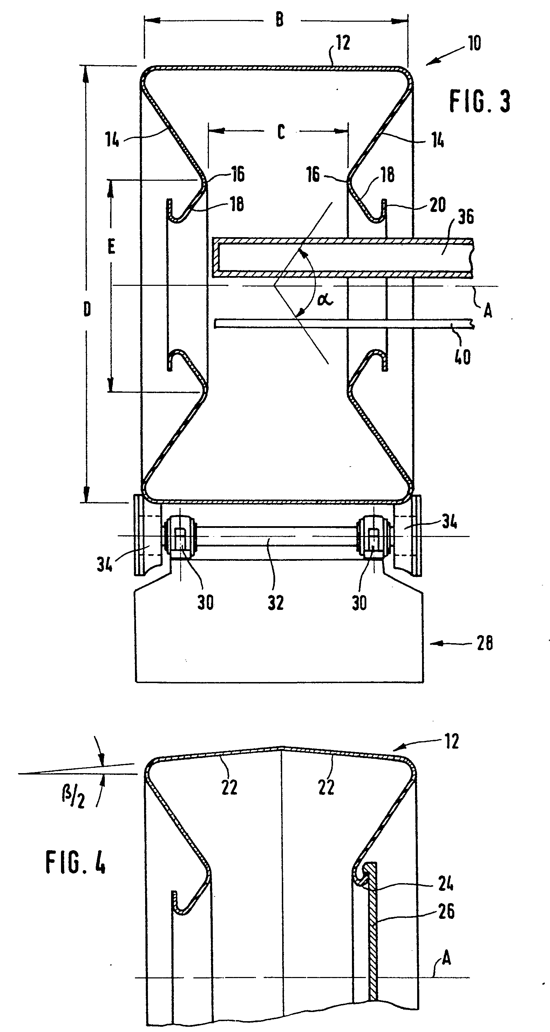

Die in Fig. 1 bis 3 dargestellte Dragiertrommel 10 ist um eine waagerechte Drehachse A drehbar, hat einen zylindrischen Rumpf 12 von der Breite B sowie zwei ringförmige Stirnwandabschnitte 14, die in je einer zur Drehachse A koaxialen Ringzone 16 enden. Die beiden Ringzonen 16 haben voneinander einen axialen Abstand C, der erheblich kleiner als die Breite B des Rumpfes ist ; gemäß Fig. 3 ist der Abstand C ungefähr halbsogroß wie die Breite B. Die Ringzonen 16 haben einen Durchmesser E, der gemäß Fig. 3 etwa halbsogroß ist wie der Durchmesser D des Rumpfes 12. Der Kegelwinkel α der Stirnwandabschnitte 14 beträgt gemäß Fig. 3 etwa 100°.

An die beiden Ringzonen 16 schließt sich je ein Endabschnitt 18 an, der sich kegelstumpfförmig axial nach außen verjüngt und mit einem Flansch 20 endet.

Das Vorstehende gilt im wesentlichen auch für das in Fig. 4 dargestellte Ausführungsbeispiel. Hier ist der Rumpf 12 jedoch nur annähernd zylindrisch, denn er ist aus zwei Rumpfteilen 22 zusamnengesetzt, die sich leicht kegelstumpfförmig mit einem Kegelwinkel B in Richtung voneinander weg verjüngen. Außerdem ist in Fig. 4 anstelle eines der beiden in Fig. 3 dargestellten Endabschnitte 18 mit zugehörigem Flansch 20 ein einfacher Bördelrand 24 vorgesehen, der sich unmittelbar an die benachbarte Ringzone 16 anschließt und eine Öffnung umgrenzt, die entsprechend größer ist als die in Fig. 3 sowie in der linken Hälfte der Fig. 4 von je einem der Flansche 20 umschlossenen Öffnungen. Die Öffnung rechts in Fig. 4 ist mit einem Deckel 26 abgedeckt, der in bekannter Weise von mechanischen Befestigungsmitteln und/oder einem im Inneren der Dragiertrommel 10 herrschenden Unterdruck festgehalten ist.

Gemäß Fig. 1 bis 3 ist die Dragiertrommel 10 auf einem Rollenbock 28 gelagert, der paarweise angeordnete Lager 30 mit darin gelagerten Wellen 32 aufweist, an deren Enden Rollen 34 befestigt sind. Von den Wellen 32 ist eine in üblicher Weise mit einem innerhalb des Rollenbocks 28 angeordneten Getriebemotor verbunden.

Die Rollen 34 sind derart ausgebildet, daß sie die Dragiertrommel 10 nicht nur in radialer Richtung abstützen, sondern auch in axialer Richtung führen. Hierzu ist es nicht erforderlich, daß der Rumpf 12 in der üblichen Weise von ringförmigen Schienen umschlossen ist, denn die kegelstumpfförmig nach innen gezogenen Stirnwandabschnitte 14 versteifen den Rumpf 12 an seinen beiden Rändern derart, daß diese die von den Rollen 34 übertragenen Abstützkräfte unmittelbar aufnehmen Können.

Parallel zur Drehachse A erstrecken sich gemäß Fig. 1 bis 3 ein zuluftrohr 36, ein Abluftrohr 38 und eine Sprühmittelleitung 40 in die Dragiertrommel 10 hinein. Zuluftrohr 36 und Abluftrohr 38 sind im Bereich zwischen den Ebenen der beiden Ringzonen 16 perforiert, und die Sprühmittelleitung 40 ist in diesem Bereich mit Düsen 42 besetzt, durch die ein Sprühmittel, beispielsweise eine Zuckerlösung oder ein Lack, auf ein in der Dragiertrommel 10 enthaltenes Dragiertgut 44 aufgesprüht oder in dieses Dragiergut eingesprüht werden kann, während die Dragiertrommel 10 sich in Richtung des Pfeils F in Fig. 1 dreht.

**Ansprüche**

1. Dragiertrommel, deren Drehachse (A) zumindest annähernd waagerecht ist, mit einem zumindest annähernd zylindrischen Rumpf (12) und zwei sich an je eine Seite des Rumpfes anschließenden, zumindest annähernd kegelstumpfförmigen Stirnwandabschnitten (14), dadurch gekennzeichnet, daß die beiden kegelstumpfförmigen Stirnwandabschnitte (14) sich in den vom Rumpf (12) umschlossenen Raum hineinerstrecken.

2. Dragiertrommel nach Anspruch 1, dadurch gekennzeichnet, daß die beiden kegelstumpfförmigen Stirnwandabschnitte (14) in Ringzonen (16) enden, deren axialer Abstand (C) voneinander 30 bis 70 % der Breite (B) des Rumpfes (12) beträgt.

3. Dragiertrommel nach Anspruch 2, dadurch gekennzeichnet, daß der Abstand (C) der Ringzonen (16) voneinander 45 bis 55 % der Breite (B) des Rumpfes (12) beträgt.

4. Dragiertrommel nach Anspruch 2 oder 3, dadurch gekennzeichnet, daß der Durchmesser (E) der Ringzonen (16) 30 bis 70 % des Durchmessers (D) des Rumpfes (12) beträgt.

5. Dragiertrommel nach Anspruch 4, dadurch gekennzeichnet, daß der Durchmesser (E) der Ringzonen (16) 45 bis 55 % des Durchmessers (D) des Rumpfes (12) beträgt.

6. Dragiertrommel nach einem der Ansprüche 1 bis 5, dadurch gekennzeichnet, daß die Kegelwinkel (α) der Stirnwandabschnitte (14) 60 bis 120° betragen.

7. Dragiertrommel nach Anspruch 6, dadurch gekennzeichnet, daß die Kegelwinkel (α) der Stirnwandabschnitte (14) 80 bis 100° betragen.

8. Dragiertrommel nach Anspruch 2, dadurch gekennzeichnet, daß sich an die Ringzonen (16) je ein Endabschnitt (18) anschließt, der sich axial nach außen kegelstumpfförmig verjüngt.

## Claims

1. A tablet coating apparatus whose axis of rotation (A) is at least approximately horizontal, comprising an at least approximately cylindrical body (12) and two at least approximately frustoconical end wall portions (14) adjoining a side of the body each, characterised in that the two frustoconical end wall portions (14) extend into the space enclosed by the body (12).

2. The tablet coating apparatus according to claim 1, characterised in that the two frustoconical end wall portions (14) end in ring zones (16), the axial distance (C) between which is 30 % to 70 % of the width (B) of the body (12).

3. The tablet coating apparatus according to claim 2, characterised in that the distance (C) between the ring zones (16) is 45 % to 55 % of the width (B) of the body (12).

4. The tablet coating apparatus according to claim 2 or 3, characterised in that the diameter (E) of the ring zones (16) is 30 % to 70 % of the diameter (D) of the body (12).

5. The tablet coating apparatus according to claim 4, characterised in that the diameter (E) of the ring zones (16) is 45 % to 55 % of the diameter (D) of the body (12).

6. The tablet coating apparatus according to any one of claims 1-5, characterised in that the taper angles ($\alpha$) of the end wall portions (14) are 60° to 120°.

7. The tablet coating apparatus according to claim 6, characterised in that the taper angles ($\alpha$) of the end wall portions (14) are 80° to 100°.

8. The tablet coating apparatus according to claim 2, characterised in that the ring zones (16) are each adjoined by an end portion (18) which tapers frustoconically and axially outwards.

## Revendications

1. Tambour de dragéification dont l'axe de rotation (A) est au moins approximativement horizontal, comprenant un corps (8) au moins approximativement cylindrique, et deux segments de parois frontales (14), au moins approximativement tronconiques, qui se raccordent chacun à un côté du corps, caractérisé en ce que les deux segments de parois frontales tronconiques (14) pénètrent dans le volume entouré par le corps (12).

2. Tambour de dragéification selon la revendication 1, caractérisé en ce que les deux segments de parois frontales tronconiques (14) se terminent par des zones annulaires (16) dont la distance d'espacement axial représente 30 à 70 % de la largeur (B) du corps (12).

3. Tambour de dragéification selon la revendication 2, caractérisé en ce que la distance (C) séparant les zones annulaires (16) l'une de l'autre représente 45 à 55 % de la largeur (B) du corps (12).

4. Tambour de dragéification selon la revendication 2 ou 3, caractérisé en ce que le diamètre (E) des zones annulaires (16) représente 30 à 70 % du diamètre (B) du corps (12).

5. Tambour de dragéification selon la revendication 4, caractérisé en ce que le diamètre (E) des zones annulaires (16) représente 45 à 55 % du diamètre (D) du corps (12).

6. Tambour de dragéification selon l'une des revendications 1 à 5, caractérisé en ce que les angles de cône ($\alpha$) des segments de parois frontales (14) sont de 60 à 120°.

7. Tambour de dragéification selon la revendication 6, caractérisé en ce que les angles de cône ($\alpha$) des segments de parois frontales (14) sont de 80 à 100°.

8. Tambour de dragéification selon la revendication 2, caractérisé en ce qu'à chacune des zones annulaires (16) se raccorde un segment terminal (18) qui se rétrécit axialement vers l'extérieur avec une forme tronconique.

**0 072 467**

FIG. 1

FIG. 2

0 072 467

FIG. 3

FIG. 4